# EUROPEAN PATENT SPECIFICATION

(11) **EP 2 490 186 B1**
(45) Date of publication and mention of the grant of the patent: **19.03.2014**
(21) Application number: 12155972.8
(22) Date of filing: 17.02.2012
(51) Int. Cl.: G07D 11/00

(54) **Image processing device and cover attachment structure**
Bildverarbeitungsvorrichtung und Abdeckungsbefestigungsstruktur
Dispositif de traitement d'images et structure de fixation de couvercle

(30) Priority: 18.02.2011 JP 2011032927
(43) Date of publication of application: 22.08.2012
(60) Divisional application: 14152977.6
(73) Proprietor: Seiko Epson Corporation, Shinjuku-ku Tokyo 163-0811 (JP)
(72) Inventor: Sasaki, Toshiyuki, Nagano, 392-8502 (JP)
(74) Representative: MERH-IP Matias Erny Reichl Hoffmann

(56) References cited:
- EP-A1- 1 939 790
- EP-A2- 1 959 404

## Description

### BACKGROUND

### 1. Technical Field

The present invention relates to an image processing device that applies image processes such as printing and scanning processes to process media including checks and recording paper, and to a structure for attaching a cover to the image processing device.

### 2. Related Art

Check processing devices used at bank teller windows, for example, that can print on checks and read check information depending upon the content of the particular check process are known from the literature. See, for example, Japanese Unexamined Patent Appl. Pub. JP-A-2008-207927. The check processing device described in JP-A-2008-207927 has plural roller pairs disposed along a U-shaped conveyance path through which checks and other processed media are conveyed for processing, and conveys a check or other slip by passing it sequentially from one roller pair to the next. An image scanner, magnetic head, and print unit are disposed along the conveyance path and used to image, read magnetic information from, and print on the checks or other processed media (referred to below as simply checks).

When a check becomes jammed in the conveyance path in this check processing device, the check must be removed from the conveyance path. To enable this, the check processing device described in JP-A-2008-207927 has a pair of covers that can pivot on a support shaft disposed in the center of the U-shaped conveyance path, and the covers can be opened when a check becomes stuck in the conveyance path. This is to make removing a check stuck in the conveyance path easy by opening the covers and exposing the conveyance path to the outside.

While checks jammed in the conveyance path can thus be easily removed with the image processing device described in JP-A-2008-207927, the print unit can also be easily accessed from the outside because the print unit is exposed to the outside when the covers are open. The user can thus accidentally touch the print unit, and the print unit can be damaged.

An image processing device and a cover attachment structure according to the invention enable easily removing processed media stuck in the conveyance path of the image processing device while also protecting the print unit and other image processing units from external exposure.

EP 1939 790 A1 shows a mechanism in which swinging the upstream-side cover part and downstream-side cover part of a check scanning apparatus open on a common support pin opens a U-shaped check transportation path. The check transportation path can be opened with a simple single-action operation to remove checks jammed in the check transportation path and for maintenance of the magnetic head and contact image sensors. When the task is completed, the open check transportation path can also be returned to the original closed position by a simple single-action operation. If only those parts that require maintenance are exposed when the check transportation path is open, tasks that require opening the transportation path can be done without damaging other parts and without soiling the operator's fingers.

EP 1959 404 A2 shows a medium conveying mechanism including a motor, a driving pulley adapted to be rotated by the motor, an endless belt wound around the driving pulley and adapted to be moved by the driving pulley in a belt moving direction, a first driven pulley around which the endless belt is wound and adapted to be rotated by the endless belt, a first conveying roller disposed on the medium conveying path and adapted to be rotated by the first driven pulley to convey the medium, and a first pressure roller disposed to correspond to the first conveying roller so as to press the medium against the first conveying roller. A distance in the medium conveying path between the information reading position and a nip portion between the first conveying roller and the first pressure roller is shorter than a distance between a leading end of the conveyed medium and back end of the recording area. The first driven pulley is disposed upstream from the driving pulley in the belt moving direction.

### SUMMARY

According to the present invention, there is proposed an image processing device according to claim 1. Dependent claims described below relate to preferred embodiments.

One aspect of the invention is an image processing device including: a conveyance path that conveys process media in a specific conveyance direction; an image processing unit having a process surface disposed facing the conveyance path; first and second pivot pins that intersect the conveyance direction and are disposed with the process surface therebetween; and a first cover and a second cover that are disposed along the conveyance path and cover the conveyance path, and can open and close pivoting respectively on the first and second pivot pins.

By disposing the first and second pivot pins with the process surface therebetween in the image processing device according to this aspect of the invention, the first cover and the second cover remain beside the process surface even when the covers are open. As a result, the image processing unit can be protected from the outside even when the covers are opened to remove process media stuck in the conveyance path.

In an image processing device according to another aspect of the invention, the first pivot pin and the second pivot pin are preferably disposed respectively on the upstream side and downstream side of the process surface in the conveyance direction.

With the image processing device according to this aspect of the invention, the positions of the first pivot pin and the second pivot pin do not change even when the cover rotates, access to the image processing unit from the upstream side and downstream side of the conveyance path is prevented, and the image processing unit can be protected from the outside.

Further preferably in an image processing device according to another aspect of the invention, the first and second covers can rotate to a position opposite the process surface with the conveyance path therebetween when open.
Because the first and second covers can rotate to a position opposite the process surface with the conveyance path therebetween in the image processing device according to this aspect of the invention, the process surface is closed off by the first and second covers, and the image processing unit can be more reliably protected from the outside.

Yet further preferably, the first cover and the second cover pivot horizontally.
Because the weight of the covers will not cause the covers to return to the closed position after the covers are opened in the image processing device according to this aspect of the invention, the image processing unit can be more reliably protected from the outside than with a configuration in which the first cover and the second cover pivot vertically.

Another aspect of the invention is an image processing device including: a conveyance path that conveys process media; an image processing unit disposed in a middle part of the conveyance path; and a pair of covers that are disposed along the conveyance path and cover the conveyance path, and are supported to open and close on a pair of pivot pins disposed to the middle part of the conveyance path; the image processing unit being disposed opposite the pair of pivot pins with the conveyance path therebetween.

With the image processing device according to this aspect of the invention, the part of the covers near the image processing unit will not separate greatly from the conveyance path when the covers open and close because the image processing unit is located at a position opposite the pivot pins of the pair of covers. Because a large space is thus not formed near the image processing unit when the covers open and close, the image processing unit can be protected from the outside.

In an image processing device according to another aspect of the invention, the pair of pivot pins are disposed in a direction intersecting the conveyance direction of the process medium in the conveyance path, and are separated from each other in the conveyance direction; the image processing unit has a process surface disposed facing the conveyance path; and the process surface is disposed positioned between the pair of pivot pins.
By creating a space in a position opposite the process surface, the image processing device according to this aspect of the invention enables placing an inkjet head capping mechanism, for example, in this space.

Further preferably, the pair of covers respectively pivot on the pair of pivot pins, and can rotate to a position opposite the process surface with the conveyance path therebetween.
Because the pair of covers rotate to a position opposite the process surface with the conveyance path therebetween, the space opposite the image processing unit is closed by the covers in the image processing device according to this aspect of the invention, and access to the image processing unit from the direction opposite the process surface can be prevented. The image processing unit can therefore be reliably protected from the outside.

Further preferably in an image processing device according to another aspect of the invention, a capping member that closes the space opposite the image processing unit is disposed between the pair of pivot pins.
In the image processing device according to this aspect of the invention, access from the direction opposite the process surface can be prevented by the capping member that closes the space opposite the process surface. The image processing unit can therefore be reliably protected from the outside.

Further preferably in an image processing device according to another aspect of the invention, the image processing unit is a fluid ejection head having an ejection nozzle that ejects a fluid; and a capping mechanism that can close the ejection nozzle is disposed to a position opposite the image processing unit with the conveyance path therebetween.
The image processing device according to this aspect of the invention can also protect the capping mechanism when the covers are open because the capping mechanism is located on the opposite side of the conveyance path as the image processing unit, which is protected from the outside even when the pair of covers are open. The ejection nozzle can also be more reliably protected by closing the space opposite the ejection nozzle with the capping mechanism.

Another aspect of the invention is an image processing device including: a conveyance path through which process media is conveyed; an image processing unit disposed with a process surface facing the conveyance path; and a pair of covers that pivot on pivot pins intersecting the conveyance direction of the conveyance path to open and close the conveyance path and are formed extending away from the pivot pins, are disposed on the upstream side and downstream side of the conveyance path with the image processing unit between the pivot pins, cover the conveyance path when the conveyance path is closed, and rotate to a position opposite the process surface when the conveyance path is open.

Because the pair of covers rotate to a position opposite the process surface, the process surface is covered by the covers when the conveyance path is opened in the image processing device according to this aspect of the invention. The process surface can therefore be protected from the outside when the conveyance path is open.

Further preferably in this image processing device, the pair of covers pivot horizontally.
Because the pair of covers will be returned by their own weight to the closed position after opening, the image processing device according to this aspect of the invention can protect the process unit from the outside more reliably than a configuration in which the pair of covers pivot vertically.

Another aspect of the invention is an attachment structure for a cover that can open and close to cover a conveyance path in an image processing device that performs an image process on process media conveyed through the conveyance path, wherein: the cover includes an upstream-side cover that covers the upstream side of the conveyance path, and a downstream-side cover that covers the downstream side of the conveyance path; the upstream-side cover and the downstream-side cover are pivotably supported by and attached to open and close on an upstream-side pivot pin and a downstream-side pivot pin, respectively; and the upstream-side pivot pin and downstream-side pivot pin are disposed opposite a protected part of the conveyance path where image process is performed with the conveyance path therebetween.

With the cover attachment structure according to this aspect of the invention, the upstream-side pivot pin and downstream-side pivot pin are disposed opposite the protected part with the conveyance path therebetween. The protected part can therefore be shielded from the upstream and downstream sides of the conveyance path, and members disposed in the protected part can be protected from the outside.

In a cover attachment structure according to another aspect of the invention, a printhead that prints on the process media is disposed in the protected part.
An image processing device using the cover attachment structure according to this aspect of the invention can protect the printhead, which is easily soiled when touched by the user, even when the cover is open.

In a cover attachment structure according to another aspect of the invention, the printhead is an inkjet head; and a capping space in which a cap for the inkjet head is disposed is formed between the upstream-side pivot pin and the downstream-side pivot pin.
The cover attachment structure according to this aspect of the invention can protect the inkjet head, which is easily soiled when touched by the user, and the cap that protects the inkjet head, from the outside.
Other objects and attainments together with a fuller understanding of the invention will become apparent and appreciated by referring to the following description and claims taken in conjunction with the accompanying drawings.
In view of the above, according to an aspect of the invention, there is provided an image processing device comprising a conveyance path for conveying process media, in particular in a specific conveyance direction; an image processing unit having a process surface for performing image processing on the process media, the image processing unit being disposed such that the process surface faces the conveyance path; first and second pivot pins (a pair of pivot pins) which are oriented transversely, in particular perpendicular, with respect to the conveyance direction, the process surface of the image processing unit being substantially disposed between the first and second pivot pins; and a first cover and a second cover (a pair of covers) that are disposed along the conveyance path and cover the conveyance path, and are configured to be opened and closed pivoting respectively on the first and second pivot pins.
Preferably, the first pivot pin and the second pivot pin are disposed respectively on the upstream side and downstream side of the process surface of the image processing unit in the conveyance direction.
Preferably, the first and second covers are respectively configured to be rotatably opened to positions on a side opposite to the process surface with the conveyance path therebetween when the first and second covers are opened.
Preferably, the first cover and the second cover are configured to pivot horizontally with respect to the conveyance path.
Preferably, the image processing unit is disposed to a middle part of the conveyance path; and/or the pair of covers are respectively supported to open and close on the pair of pivot pins disposed to the middle part of the conveyance path; the image processing unit being preferably disposed opposite to the pair of pivot pins with the conveyance path therebetween.
Preferably, the pair of pivot pins are disposed in a direction intersecting the conveyance direction of the process medium in the conveyance path, and are separated from each other in the conveyance direction.
Preferably, the image processing device further comprises a capping member for closing a space opposite the image processing unit with respect to the conveyance path, the capping member being disposed between the pair of pivot pins.
Preferably, the image processing unit is a fluid ejection head having an ejection nozzle that ejects a fluid; and/or a capping mechanism configured to close the ejection nozzle is disposed to a position opposite the image processing unit with the conveyance path therebetween.
Preferably, the pair of covers is configured to pivot on the pivot pins which are intersecting the conveyance direction of the conveyance path to open and close the conveyance path (3) and are formed extending away from the pivot pins.
Preferably, the first and second covers are disposed on the upstream side and downstream side of the conveyance path, respectively, with the image processing unit being disposed substantially between the pivot pins, and cover the conveyance path when closed.
According to another aspect, there is provided an attachment structure for a cover that can open and close to cover a conveyance path in an image processing device that performs an image process on process media conveyed through the conveyance path, wherein: the cover includes an upstream-side cover that covers the upstream side of the conveyance path, and a downstream-side cover that covers the downstream side of the conveyance path; the upstream-side cover and the downstream-side cover are pivotably supported by and attached to open and close on an upstream-side pivot pin and a downstream-side pivot pin, respectively; and the upstream-side pivot pin and downstream-side pivot pin are disposed opposite a protected part of the conveyance path where image process is performed with the conveyance path therebetween.
Preferably, the printhead that prints on the process media is disposed in the protected part.
Preferably, the printhead is an inkjet head; and/or a capping space in which a cap for the inkjet head is disposed is formed between the upstream-side pivot pin and the downstream-side pivot pin.
Preferably, the image processing device according to any one of the above-described aspects comprises an attachment structure as described above, wherein the first and second covers correspond to the upstream-side and downstream-side covers and the first and second pivot pins correspond to the upstream-side and downstream-side pivot pins.

### BRIEF DESCRIPTION OF THE DRAWINGS

FIG. 1 is an exemplary schematic oblique view of a check processing device according to a preferred embodiment of the invention.
FIG. 2 is an exemplary schematic top view of the check processing device according to a preferred embodiment of the invention.
FIG. 3 exemplarily shows the check processing device in FIG. 2 when the access covers are open.
FIG. 4 exemplarily shows the check processing device according to another embodiment of the invention when the access covers are open.

### DESCRIPTION OF EMBODIMENTS

Preferred embodiments of a check processing device according to the present invention are described below with reference to the accompanying figures.

### Basic structure

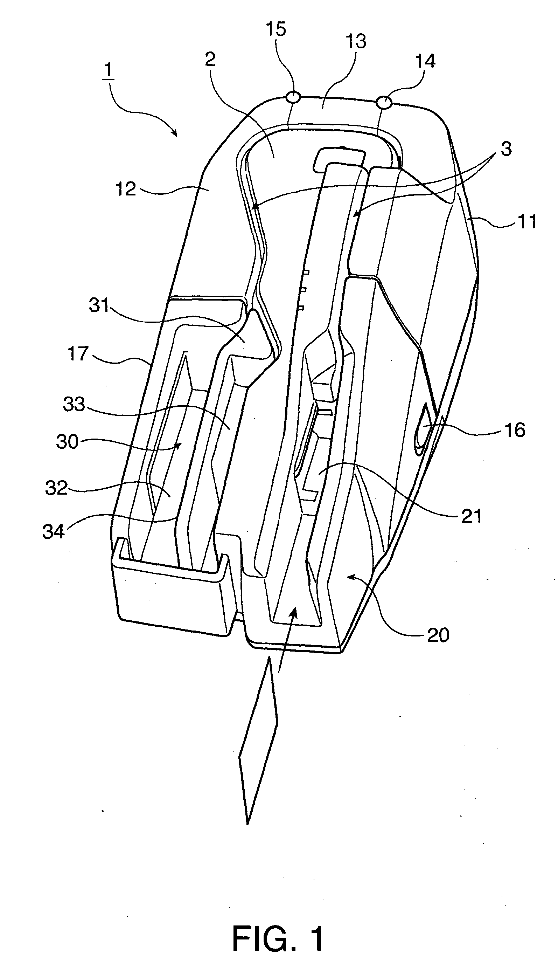

FIG. 1 is an oblique view of a check processing device 1 according to an embodiment of the invention. The check processing device 1 includes a main case 2, a middle cover 13 affixed to the main case 2, and a pair of access covers 11, 12 that are pivotably connected to the middle cover 13 by hinges (pivot pins) 14, 15, respectively.

A conveyance path 3 for conveying checks as the processed media from the upstream side to the downstream side is formed around the outside of the main case 2 in a basic U-shaped configuration when seen from above. The pair of access covers 11, 12 are formed along the conveyance path 3 on the outside of the conveyance path 3 so that they respectively cover the upstream side and downstream side of the conveyance path 3. The middle cover 13 that covers the middle part of the conveyance path 3 is disposed between the access covers 11, 12. The hinges 14, 15 are disposed with the pivot pins intersecting the conveyance direction of the conveyance path 3, and the access covers 11, 12 are pivotably attached by the hinges 14, 15 to the middle cover 13. The hinges 14, 15 may be disposed adjacent to the conveyance path 3 substantially at the positions between the middle part of the conveyance path 3 covered by the middle cover 13 and the upstream side and downstream side of the conveyance path 3, respectively, which are covered by the access covers 11, 12.

A paper feed unit 20 is disposed to the upstream end of the conveyance path 3. The paper feed unit 20 includes an in-feed mechanism including a feed roller and a drive motor (not shown) that feeds checks to the upstream end of the conveyance path 3, and a separation mechanism such as a separation pad or a retard roller. The loading pocket 21 of the paper feed unit 20, into which checks to be processed can be dropped, is open to the top and side of the check processing device 1, and checks can be fed into the check processing device 1 from two directions, the top and the side. Checks which have a printed surface on one side, can be loaded into the loading pocket 21 with the printed side on the outside side of the conveyance path 3, and can be conveyed standing vertically on edge through the conveyance path 3.

A discharge unit 30 into which the checks can be discharged from the conveyance path is disposed at the downstream end of the conveyance path 3. The discharge unit 30 includes a path selection mechanism 31 disposed rotatably to the main case 2, and a first exit pocket 32 and second exit pocket 33 disposed downstream from the path selection mechanism 31. Checks discharged from the conveyance path 3 are sorted by the path selection mechanism 31 into the first exit pocket 32 or the second exit pocket 33, which are separated by a divider 34.

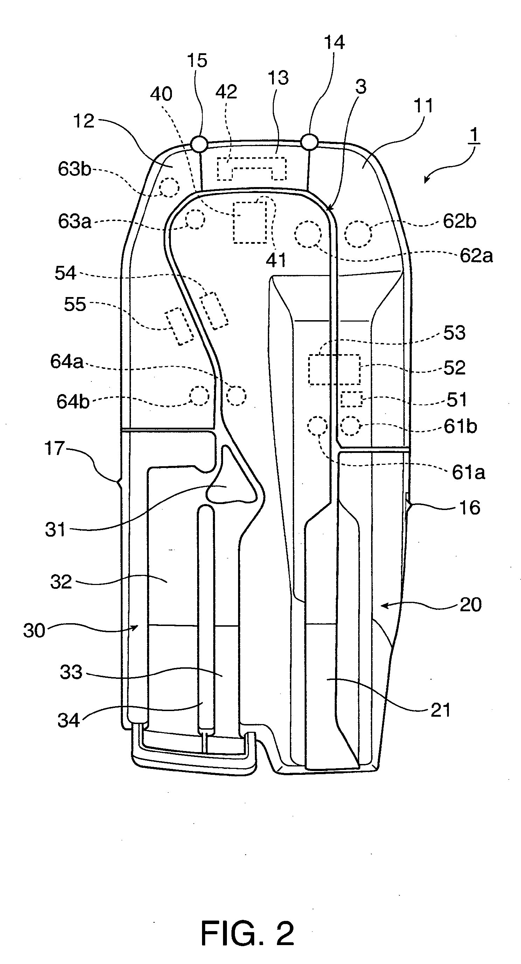

The internal structure of the check processing device is described next with reference to FIG. 2. FIG. 2 is a top view of the check processing device 1 in which internal parts are denoted by dotted lines.

A printhead (exemplarily embodying an image processing unit) 40 is disposed to the main case 2 at a middle position midway between the upstream end and the downstream end of the conveyance path 3 (at the bottom of the U-shape of the conveyance path 3). The printhead 40 is disposed opposite the gap between the pair of hinges 14, 15 with the ejection surface (exemplarily embodying a process surface) 41 in which ejection nozzles are formed facing the conveyance path 3. The check processing device 1 can be compactly constructed by disposing the printhead 40 inside the main case 2 on the inside of the U-shaped conveyance path 3.

An inkjet printhead that prints on checks by ejecting ink can be used as the printhead 40. A line printhead 40 that extends across the width of the check (the dimension perpendicular to the conveyance direction) may also be used.

A capping mechanism 42 capable of capping the ejection nozzles in the ejection surface 41 when the printhead 40 is not printing is disposed between the hinges 14, 15 opposite the ejection surface 41 with the conveyance path 3 therebetween, and this capping mechanism 42 is covered by the middle cover 13.

The capping mechanism 42 has a cap unit that covers the ejection surface 41 so that the ejection nozzles are closed, preventing evaporation of ink from the nozzles when not printing and preventing ink from clogging the nozzles. The capping mechanism 42 has a drive unit that moves the cap unit into contact with the ejection surface 41 when the printhead 40 is not printing, and retracts the cap unit from the ejection surface 41 to a position not interfering with check conveyance when the printhead 40 prints.

A magnet 51 capable of magnetizing magnetic ink printed on checks is disposed to the access cover 11 on the downstream side of the paper feed unit 20. Downstream from the magnet 51 and upstream of the printhead 40, a magnetic scanner 52 capable of reading magnetic information is disposed to the access cover 11 with the scanning surface facing the conveyance path 3. A pressure pad 53 that presses checks to the scanning surface of the magnetic scanner 52 is disposed opposite the magnetic scanner 52 with the conveyance path 3 therebetween. An MICR head can be used as the magnetic scanner 52.

Optical scanners 54, 55 capable of reading the back and front sides of checks are disposed with the conveyance path 3 therebetween downstream from the printhead 40 on the main case 2 and access cover 12, respectively, and can capture images of the front and back sides of the passing checks. Contact image scanners can be used as the optical scanners 54, 55.

The check processing device 1 also has a plurality of conveyance roller pairs 61a to 64b that convey checks from the upstream side to the downstream side of the conveyance path 3. These plural conveyance roller pairs 61a to 64b are disposed with conveyance rollers 61a, 62a, 63a, 64a disposed to the main case 2 opposite conveyance rollers 61b, 62b, 63b, 64b disposed to the access covers 11, 12 with the conveyance path 3 therebetween. The conveyance rollers 61a, 62a, 63a, 64a disposed to the main case 2 are connected by a common endless belt to a paper feed motor (not shown), and are synchronously driven rotationally.

### Basic operation

Checks loaded into the loading pocket 21 of the check processing device 1 are, for example, fed by the in-feed roller (not shown) of the paper feed unit 20, separated one at a time by the separation roller or other sheet separating mechanism, and conveyed to the upstream end of the conveyance path 3.

The check conveyed into the conveyance path 3 from the paper feed unit 20 is held and conveyed by the first roller pair 61a, 61b, and magnetic ink on the check is magnetized by the magnet 51. The check is pressed to the magnetic scanner 52 by the pressure pad 53, and the magnetized magnetic ink is read by the magnetic scanner 52. The magnetic information that is read is sent to an external host computer, for example. The check is then held by the second roller pair 62a, 62b, and conveyed through the curved part of the access cover 11 to the printhead 40 as the conveyance direction curves approximately 90 degrees.

When the check is conveyed by the second roller pair 62a, 62b to the position opposite of the printhead 40, the printhead 40 prints on the printing side of the check based on input from the external host computer, for example. The printed check is then held by the third roller pair 63a, 63b and conveyed to the optical scanners 54, 55 while the conveyance direction curves approximately 90 degrees again through the curved part of the access cover 12. The optical scanners 54, 55 then read the back and front sides of the check, and send the captured image information to the host computer. After passing the optical scanners 54, 55, the check is held and conveyed by the fourth roller pair 64a, 64b, and discharged into the discharge unit 30.

If the check information could not be read by the magnetic scanner 52, the check could be conveyed without being printed by the printhead 40 and the path selection mechanism 31 can be rotated so that the check is discharged into the second exit pocket 33. By discharging normally processed checks into the first exit pocket 32, and discharging checks that were not normally processed into the second exit pocket 33, correctly processed checks and checks that were not correctly processed can be easily separated and removed.

Because the check processing device 1 according to this embodiment of the invention can thus read and write checks in a single operation, check processing is made easier for the teller or other user processing the checks.

### Eliminating paper jams

In the check processing device 1 according to this embodiment of the invention, lock mechanisms 16, 17 hold the ends of the access covers 11, 12 at the opposite ends as the hinges 14, 15 engaged with the paper feed unit 20 and discharge unit 30, when in the closed cover position as shown in FIG. 1 and FIG. 2. Note that a slide lock mechanism or other locking mechanism known from the literature can be used for the lock mechanisms 16, 17.

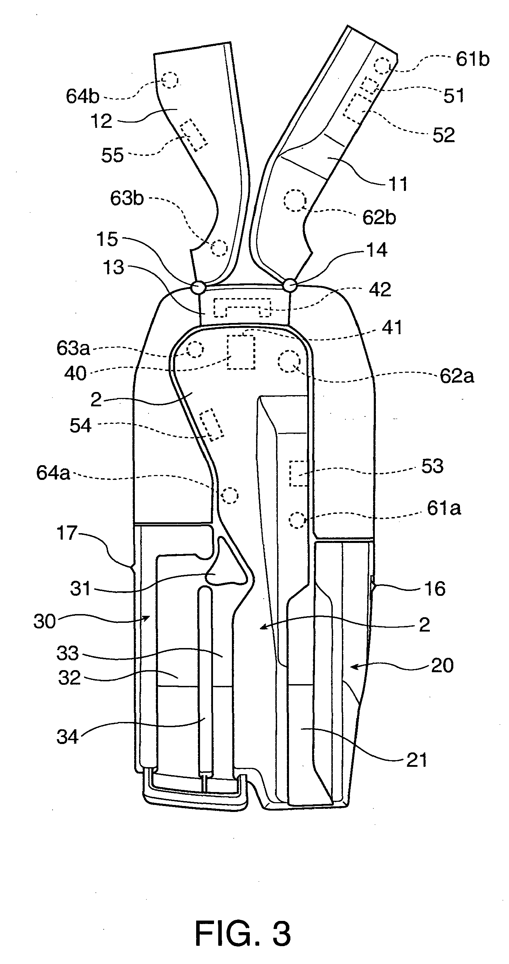

The hinges 14, 15 of the access covers 11, 12 are disposed intersecting the media conveyance direction (that is, vertically in line with the paper surface in the example shown in the figure, i.e. vertical to the drawing plane of Fig. 3). As a result, when the lock mechanisms 16, 17 are released, the access covers 11, 12 pivot on the hinges 14, 15 as shown in FIG. 3, the ends of the access covers 11, 12 far from the hinges 14, 15 move away from the conveyance path 3, and the conveyance path 3 is opened to the side of the check processing device 1 without the access covers 11, 12 interfering with each other. As exemplarily shown in Fig. 3, the access covers 11,12 can be opened by pivoting about the pivot pins of hinges 14, 15 in different directions, e.g. the access cover 11 in Fig. 3 opens in the counter-clockwise direction and the access cover 12 in Fig. 3 opens in the clockwise direction.

As described above, the pressure pad 53, optical scanner 54, and conveyance rollers 61a, 62a, 63a, 64a are attached to the main case 2, and the magnet 51, magnetic scanner 52, optical scanner 55, and conveyance rollers 61b, 62b, 63b, 64b are attached to the access covers 11, 12. Therefore, when the access covers 11, 12 swing open, the conveyance path 3 is opened so that the plural conveyance rollers 61a to 64a, and the reading surfaces of the magnetic scanner 52 and optical scanners 54, 55 are exposed to the outside.

Therefore, when a check becomes jammed during conveyance through the conveyance path 3, the conveyance path 3 can be exposed to the side by opening the one or both of the access covers 11, 12, and the check jammed in the conveyance path 3 can be easily removed from the side of the check processing device 1 without interfering with the magnetic scanner 52 or other parts.

### Protecting the printhead when the access covers are open

In the check processing device 1 according to this embodiment of the invention the hinges 14, 15 of the access covers 11, 12 are disposed near the ejection surface 41 of the printhead 40. The parts of the access covers 11, 12 near the hinges 14, 15 therefore do not move greatly when the access covers 11, 12 swing open to remove a check jammed in the conveyance path 3, and remain close to the ejection surface 41 even when the access covers 11, 12 are open. Because a large space is thus not opened around the printhead 40, external access to the printhead 40 is prevented by the access covers 11, 12, and the printhead 40 can be protected from the outside even when the access covers 11, 12 are open.

The positions of the hinges 14, 15 that are the pivot axes of the access covers 11, 12 do not change when the access covers 11, 12 pivot. As described above, the hinges 14, 15 are located near the ejection surface 41 on the upstream and downstream sides of the ejection surface 41 in the conveyance direction, respectively. The ejection surface 41 of the printhead 40 is therefore advantageously sheltered from the upstream and downstream sides of the conveyance path 3 by the hinges 14, 15 even when one or both of the access covers 11, 12 are open. More specifically, the printhead 40 can be reliably protected because the user cannot access the printhead 40 from the upstream or downstream sides of the conveyance path 3.

Furthermore, the capping mechanism 42 and the middle cover 13 that covers the capping mechanism 42 are disposed as capping members in the space opposite the ejection surface 41 of the printhead 40, and the space opposite the ejection surface 41 is closed off. The ejection surface 41 is thus covered by the capping mechanism 42 and middle cover 13 and not exposed to the outside even when the access covers 11, 12 are open, and the printhead 40 can be reliably protected from the outside.

Yet further, as shown in FIG. 3, the access covers 11, 12 pivot to a position opposite the ejection surface 41 with the conveyance path 3 therebetween when open. The printhead 40 can therefore be more reliably protected because the open access covers 11, 12 restrict access to the printhead 40 from the direction opposite the ejection surface 41.

And the hinges 14, 15 of the access covers 11, 12 extend vertically so that the access covers 11, 12 pivot horizontally. This configuration can hold the access covers 11, 12 open more stably than a configuration in which the access covers 11, 12 swing vertically because the access covers 11, 12 will not swing closed due to their own weight. Jammed checks can therefore be easily removed, the access covers 11, 12 can be held in a position restricting access to the printhead 40, and the printhead 40 can be protected.

A preferred embodiment of the invention is described above, but the technical scope of the invention is not limited to the scope of the foregoing embodiment. That the foregoing embodiment can be modified and improved in many ways without departing from the scope of the accompanying claims will be obvious to one with ordinary skill in the related art.

The printhead 40 is described as being an inkjet head in the foregoing embodiment, but any image processing unit desirably protected from the outside, such as an optical scanner whose scanning accuracy can be reduced by soiling of the scanning surface, could obviously be disposed in the protected part between the hinges 14, 15. In addition, only the printhead 40 is disposed in the protected part between the hinges 14, 15 in the foregoing embodiment, but a configuration that disposes and protects plural units, such as the printhead and optical scanner, from the outside as needed in the protected part between the upstream and downstream access covers 11, 12 is also conceivable.

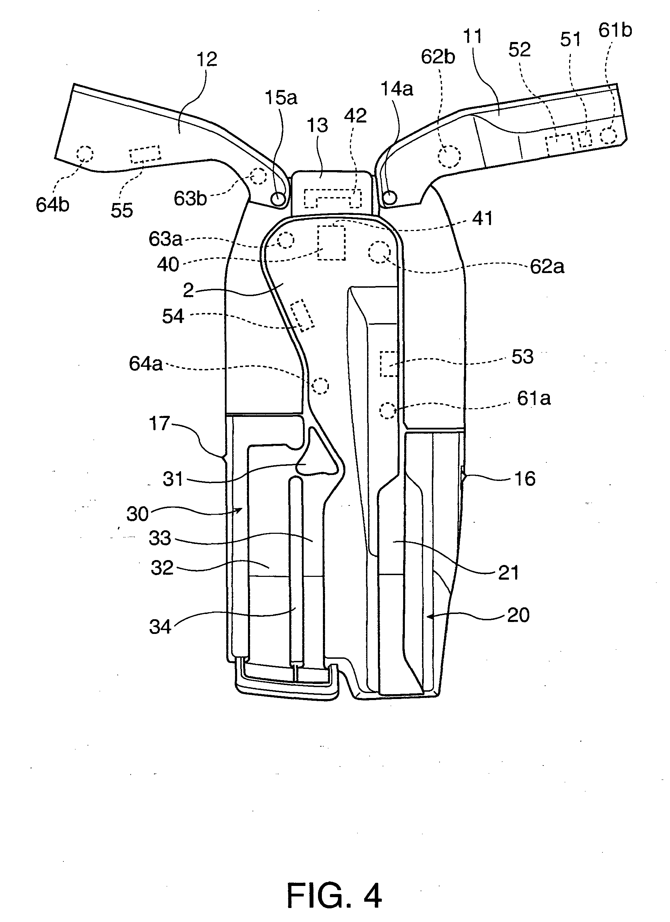

Yet further, the access covers 11, 12 are pivotably attached by hinges 14, 15 on the outside of the access covers 11, 12 in the embodiment described above, but a configuration in which pivot pins 14a, 15a are disposed on the printhead 40 side of the access covers 11, 12 is also conceivable as shown in FIG. 4.

Yet further, instead of pivoting to a position where the access covers 11, 12 are completely opposite the printhead 40 as shown in FIG. 3, a configuration in which the middle cover 13 prevents access from the direction opposite the printhead 40, and the pivot pins 14a, 15a of the access covers 11, 12 block access from the upstream and downstream sides of the printhead 40, as shown in FIG. 4 is also conceivable.

Furthermore, the magnetic scanner 52 and optical scanner 55 are disposed to the access covers 11, 12, and the entire conveyance path 3 except for the part near the printhead 40 is open to the outside when the access covers 11, 12 are open is described above, but some parts such as the magnetic scanner may be fixed to the main case 2 if removing a check is possible.

The invention is described using a check processing device 1 for example above, but the invention can obviously also be applied to other types of image processing devices including printers for printing receipts, page scanners, and other types of optical scanners.
The invention being thus described, it will be obvious that it may be varied in many ways. Such variations are not to be regarded as a departure from the spirit and scope of the invention, and all such modifications as would be obvious to one skilled in the art are intended to be included within the scope of the following claims.
Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. An image processing device comprising:
a conveyance path (3) for conveying process media, in particular in a specific conveyance direction;
an image processing unit (40) having a process surface (41) for performing image processing on the process media, the image processing unit (40) being disposed such that the process surface (41) faces the conveyance path (3);
a first pivot pin (14; 14a) which is oriented transversely, in particular perpendicular, with respect to the conveyance direction, and
a first cover (11) and a second cover (12) that are disposed along the conveyance path (3) and cover the conveyance path (3);
**characterized by**
a second pivot pin (15; 15a) which is oriented transversely, in particular perpendicular, with respect to the conveyance direction,
wherein
the process surface (41) of the image processing unit (40) isdisposed between the first and second pivot pins (14, 15; 14a, 15a); and
the first cover (11) and the second cover (12) are configured to be opened and closed pivoting respectively on the first and second pivot pins (14, 15; 14a, 15a).

2. The image processing device described in claim 1, wherein:
the first pivot pin (14; 14a) and the second pivot pin (15; 15a) are disposed respectively on the upstream side and downstream side of the process surface (41) of the image processing unit (40) in the conveyance direction (3).

3. The image processing device described in claim 1 or 2, wherein:
the first and second covers (11, 12) are respectively configured to be rotatably opened to positions on a side opposite to the process surface (41) with the conveyance path therebetween when the first and second covers (11, 12) are opened.

4. The image processing device described in any one of claims 1 to 3, wherein:
the first cover (11) and the second cover (12) are configured to pivot horizontally with respect to the conveyance path (3).

5. The image processing device according to any one of claims 1 to 4, wherein:
the image processing unit (40) is disposed to a middle part of the conveyance path (3); and
the pair of covers (11,12) are respectively supported to open and close on the pair of pivot pins (14, 15; 14a, 15a) disposed to the middle part of the conveyance path (3);
the image processing unit (40) being disposed opposite to the pair of pivot pins (14, 15; 14a, 15a) with the conveyance path (3) therebetween.

6. The image processing device described in any one of claims 1 to 5, wherein:
the pair of pivot pins (14, 15; 14a, 15a) are disposed in a direction intersecting the conveyance direction of the process medium in the conveyance path (3), and are separated from each other in the conveyance direction (3).

7. The image processing device described in any one of claims 1 to 6, further comprising:
a capping member (42) for closing a space opposite the image processing unit (40) with respect to the conveyance path (3), the capping member (42) being disposed between the pair of pivot pins (14, 15; 14a, 15a).

8. The image processing device described in any one of claims 1 to 7, wherein:
the image processing unit (40) is a fluid ejection head having an ejection nozzle that ejects a fluid; and
a capping mechanism (42) configured to close the ejection nozzle is disposed to a position opposite the image processing unit (40) with the conveyance path (3) therebetween.

9. The image processing device according to any one of claims 1 to 8, wherein:
the pair of covers (11, 12) is configured to pivot on the pivot pins which are intersecting the conveyance direction of the conveyance path (3) to open and close the conveyance path (3) and are formed extending away from the pivot pins (14, 15; 14a, 15a).

10. The image processing device according to any one of claims 1 to 9, wherein:
the first and second covers (11, 12) are disposed on the upstream side and downstream side of the conveyance path (3), respectively, with the image processing unit (40) being disposed between the pivot pins (14, 15; 14a, 15a), and cover the conveyance path (3) when closed.

11. The image processing device according to any one of claims 1 to 10, comprising an attachment structure for a cover (11, 12, 13) that can open and close to cover a conveyance path (3) in an image processing device (1) that performs an image process on process media conveyed through the conveyance path (3), wherein:
the cover (11, 12, 13) includes an upstream-side cover (11) that covers the upstream side of the conveyance path (3), and a downstream-side cover (12) that covers the downstream side of the conveyance path (3);
the upstream-side cover (11) and the downstream-side cover (12) are pivotably supported by and attached to open and close on an upstream-side pivot pin (14; 14a) and a downstream-side pivot pin (15; 15a), respectively; and
the upstream-side pivot pin (14; 14a) and downstream-side pivot pin (15; 15a) are disposed opposite a protected part (13) of the conveyance path (3) where image process is performed with the conveyance path (3) therebetween;
wherein the first and second covers correspond to the upstream-side and downstream-side covers and the first and second pivot pins correspond to the upstream-side and downstream-side pivot pins.

12. The image processing device described in claim 11, wherein:
a printhead (40) that prints on the process media is disposed in the protected part (13).

13. The image processing device described in claim 12, wherein:
the printhead (40) is an inkjet head; and
a capping space in which a cap (42) for the inkjet head is disposed is formed between the upstream-side pivot pin (14; 14a) and the downstream-side pivot pin (15; 15a).

## Patentansprüche

1. Eine Bildverarbeitungsvorrichtung, umfassend:
einen Förderweg (3) zur Förderung von Verarbeitungsmedien, insbesondere in einer spezifischen Förderrichtung;
eine Bildverarbeitungseinheit (40) mit einer Verarbeitungsfläche (41) zur Durchführung einer Bildverarbeitung an den Verarbeitungsmedien, wobei die Bildverarbeitungseinheit (40) derart angeordnet ist, dass die Verarbeitungsfläche (41) dem Förderweg (3) gegenüberliegt;
einen ersten Drehzapfen (14; 14a), der quer, insbesondere senkrecht, in Bezug auf die Förderrichtung ausgerichtet ist; und
eine erste Abdeckung (11) und eine zweite Abdeckung (12), die entlang des Förderwegs (3) angeordnet sind und den Förderweg (3) abdecken;
**gekennzeichnet durch**
einen zweiten Drehzapfen (15; 15a), der quer, insbesondere senkrecht, in Bezug auf die Förderrichtung ausgerichtet ist,
wobei
die Verarbeitungsfläche (41) der Bildverarbeitungseinheit (40) zwischen den ersten und zweiten Drehzapfen (14, 15; 14a, 15a) angeordnet ist; und
die erste Abdeckung (11) und die zweite Abdeckung (12) konfiguriert sind, um jeweils an den ersten und zweiten Drehzapfen (14, 15; 14a, 15a) drehend geöffnet und geschlossen zu werden.

2. Die Bildverarbeitungsvorrichtung nach Anspruch 1, wobei:
der erste Drehzapfen (14; 14a) und der zweite Drehzapfen (15; 15a) jeweils an der Stromaufwärtsseite und Stromabwärtsseite der Verarbeitungsfläche (41) der Bildverarbeitungseinheit (40) in der Förderrichtung (3) angeordnet sind.

3. Die Bildverarbeitungsvorrichtung nach Anspruch 1 oder 2, wobei:
die ersten und zweiten Abdeckungen (11, 12) jeweils konfiguriert sind, zu Positionen an einer Seite entgegengesetzt zu der Verarbeitungsfläche (41), wobei der Förderweg dazwischen ist, drehbar geöffnet zu werden, wenn die ersten und zweiten Abdeckungen (11, 12) geöffnet werden.

4. Die Bildverarbeitungsvorrichtung nach einem der Ansprüche 1 bis 3, wobei:
die erste Abdeckung (11) und die zweite Abdeckung (12) konfiguriert sind, sich in Bezug auf den Förderweg (3) horizontal zu drehen.

5. Die Bildverarbeitungsvorrichtung nach einem der Ansprüche 1 bis 4, wobei:
die Bildverarbeitungseinheit (40) an einem mittleren Teil des Förderwegs (3) angeordnet ist; und
das Paar von Abdeckungen (11, 12) jeweils getragen wird, sich an dem Paar von Drehzapfen (14, 15; 14a, 15a), das an dem mittleren Teil des Förderwegs (3) angeordnet ist, zu öffnen und zu schließen;
die Bildverarbeitungseinheit (40) entgegengesetzt zu dem Paar von Drehzapfen (14, 15; 14a, 15a) angeordnet ist, wobei der Förderweg (3) dazwischen ist.

6. Die Bildverarbeitungsvorrichtung nach einem der Ansprüche 1 bis 5, wobei:
das Paar von Drehzapfen (14, 15; 14a, 15a) in einer Richtung angeordnet ist, die die Förderrichtung des Verarbeitungsmediums in dem Förderweg (3) schneidet, und in der Förderrichtung (3) voneinander getrennt sind.

7. Die Bildverarbeitungsvorrichtung nach einem der Ansprüche 1 bis 6, ferner umfassend:
ein Abdeckelement (42) zum Schließen eines Raums entgegengesetzt der Bildverarbeitungseinheit (40) in Bezug auf den Förderweg (3), wobei das Abdeckelement (42) zwischen dem Paar von Drehzapfen (14, 15; 14a, 15a) angeordnet ist.

8. Die Bildverarbeitungsvorrichtung nach einem der Ansprüche 1 bis 7, wobei:
die Bildverarbeitungseinheit (40) ein Fluidausstoßkopf mit einer Ausstoßdüse ist, die ein Fluid ausstößt; und
ein Abdeckmechanismus (42), zum Schließen der Ausstoßdüse konfiguriert, an einer Position entgegengesetzt der Bildverarbeitungseinheit (40) angeordnet ist, wobei der Förderweg (3) dazwischen ist.

9. Die Bildverarbeitungsvorrichtung nach einem der Ansprüche 1 bis 8, wobei:
das Paar von Abdeckungen (11, 12) konfiguriert ist, sich an den Drehzapfen zu drehen, die die Förderrichtung des Förderwegs (3) schneiden, um den Förderweg (3) zu öffnen und zu schließen, und sich weg von den Drehzapfen (14, 15; 14a, 15a) erstreckend ausgebildet ist.

10. Die Bildverarbeitungsvorrichtung nach einem der Ansprüche 1 bis 9, wobei:
die ersten und zweiten Abdeckungen (11, 12) an der Stromaufwärtsseite bzw. Stromabwärtsseite des Förderwegs (3) angeordnet sind, wobei die Bildverarbeitungseinheit (40) zwischen den Drehzapfen (14, 15; 14a, 15a) angeordnet ist, und den Förderweg (3) abdecken, wenn er geschlossen ist.

11. Die Bildverarbeitungsvorrichtung nach einem der Ansprüche 1 bis 10, umfassend eine Befestigungsstruktur für eine Abdeckung (11, 12, 13), die sich öffnen und schließen kann, um einen Förderweg (3) in einer Bildverarbeitungsvorrichtung (1) abzudecken, die eine Bildverarbeitung an Verarbeitungsmedien durchführt, die über den Förderweg (3) befördert werden, wobei:
die Abdeckung (11, 12, 13) eine stromaufwärtsseitige Abdeckung (11), die die Stromaufwärtsseite des Förderwegs (3) abdeckt, und eine stromabwärtsseitige Abdeckung (12), die die Stromabwärtsseite des Förderwegs (3) abdeckt, einschließt;
die stromaufwärtsseitige Abdeckung (11) und die stromabwärtsseitige Abdeckung (12) drehbar getragen werden durch und zum Öffnen und Schließen befestigt sind an einem stromaufwärtsseitigen Drehzapfen (14; 14a) bzw. einem stromabwärtsseitigen Drehzapfen (15; 15a); und
der stromaufwärtsseitige Drehzapfen (14; 14a) und stromabwärtsseitige Drehzapfen (15; 15a) entgegengesetzt einem geschützten Teil (13) des Förderwegs (3) angeordnet sind, wo die Bildverarbeitung durchgeführt wird, wobei der Förderweg (3) dazwischen ist;
wobei die ersten und zweiten Abdeckungen den stromaufwärtsseitigen und stromabwärtsseitigen Abdeckungen entsprechen und die ersten und zweiten Drehzapfen den stromaufwärtsseitigen und stromabwärtsseitigen Drehzapfen entsprechen.

12. Die Bildverarbeitungsvorrichtung nach Anspruch 11, wobei:
ein Druckkopf (40), der auf die Verarbeitungsmedien druckt, in dem geschützten Teil (13) angeordnet ist.

13. Die Bildverarbeitungsvorrichtung nach Anspruch 12, wobei:
der Druckkopf (40) ein Tintenstrahlkopf ist; und
ein Abdeckraum, in dem eine Abdeckung (42) für den Tintenstrahlkopf angeordnet ist, zwischen dem stromaufwärtsseitigen Drehzapfen (14; 14a) und dem stromabwärtsseitigen Drehzapfen (15; 15a) gebildet wird.

## Revendications

1. Dispositif de traitement d'image comprenant :
un chemin de transport (3) pour transporter des supports de traitement, en particulier dans une direction de transport spécifique ;
une unité de traitement d'image (40) ayant une surface de traitement (41) pour réaliser un traitement d'image sur les supports de traitement, l'unité de traitement d'image (40) étant disposée de telle sorte que la surface de traitement (41) est tournée vers le chemin de transport (3) ;
un premier pivot (14 ; 14a) qui est orienté transversalement, en particulier perpendiculaire, par rapport à la direction de transport, et
un premier couvercle (11) et un second couvercle (12) qui sont disposés le long du chemin de transport (3) et couvrent le chemin de transport (3) ;
**caractérisé par** :
un second pivot (15 ; 15a) qui est orienté transversalement, en particulier perpendiculaire, par rapport à la direction de transport,
dans lequel :
la surface de traitement (41) de l'unité de traitement d'image (40) est disposée entre les premier et second pivots (14, 15 ; 14a, 15a) ; et
le premier couvercle (11) et le second couvercle (12) sont configurés pour être ouverts et fermés en pivotant respectivement sur les premier et second pivots (14, 15 ; 14a, 15a).

2. Dispositif de traitement d'image selon la revendication 1, dans lequel :
le premier pivot (14 ; 14a) et le second pivot (15 ; 15a) sont disposés respectivement sur le côté amont et le côté aval de la surface de traitement (41) de l'unité de traitement d'image (40) dans la direction de transport (3).

3. Dispositif de traitement d'image selon les revendications 1 ou 2, dans lequel :
les premier et second couvercles (11, 12) sont respectivement configurés pour être ouverts de manière rotative à des positions sur un côté opposé à la surface de traitement (41) avec le chemin de transport entre ceux-ci lorsque les premier et second couvercles (11, 12) sont ouverts.

4. Dispositif de traitement d'image selon l'une quelconque des revendications 1 à 3, dans lequel :
le premier couvercle (11) et le second couvercle (12) sont configurés pour pivoter horizontalement par rapport au chemin de transport (3).

5. Dispositif de traitement d'image selon l'une quelconque des revendications 1 à 4, dans lequel :
l'unité de traitement d'image (40) est disposée sur une partie médiane du chemin de transport (3) ; et
la paire de couvercles (11, 12) est respectivement supportée pour s'ouvrir et se fermer sur la paire de pivots (14, 15 ; 14a, 15a) disposés sur la partie médiane du chemin de transport (3) ;
l'unité de traitement d'image (40) étant disposée opposée à la paire de pivots (14, 15 ; 14a, 15a) avec le chemin de transport (3) entre ceux-ci.

6. Dispositif de traitement d'image selon l'une quelconque des revendications 1 à 5, dans lequel :
les deux pivots (14, 15 ; 14a, 15a) sont disposés dans une direction coupant la direction de transport du support de traitement dans le chemin de transport (3), et sont séparés l'un de l'autre dans la direction de transport (3).

7. Dispositif de traitement d'image selon l'une quelconque des revendications 1 à 6, comprenant en outre :
un élément de recouvrement (42) pour fermer un espace opposé à l'unité de traitement d'image (40) par rapport au chemin de transport (3), l'élément de recouvrement (42) étant disposé entre la paire de pivots (14, 15 ; 14a, 15a).

8. Dispositif de traitement d'image selon l'une quelconque des revendications 1 à 7, dans lequel :
l'unité de traitement d'image (40) est une tête d'éjection de fluide ayant une buse d'éjection qui éjecte un fluide ; et
un mécanisme de recouvrement (42) configuré pour fermer la buse d'éjection est disposé à une position opposée à l'unité de traitement d'image (40) avec le chemin de transport (3) entre ceux-ci.

9. Dispositif de traitement d'image selon l'une quelconque des revendications 1 à 8, dans lequel :
les deux couvercles (11, 12) sont configurés pour pivoter sur les pivots qui coupent la direction de transport du chemin de transport (3) pour ouvrir et fermer le chemin de transport (3) et sont formés s'étendant à l'opposé des pivots (14, 15 ; 14a, 15a).

10. Dispositif de traitement d'image selon l'une quelconque des revendications 1 à 9, dans lequel :
les premier et second couvercles (11, 12) sont disposés sur le côté amont et le côté aval du chemin de transport (3), respectivement, l'unité de traitement d'image (40) étant disposée entre les pivots (14, 15 ; 14a, 15a), et couvrent le chemin de transport (3) lorsqu'ils sont fermés.

11. Dispositif de traitement d'image selon l'une quelconque des revendications 1 à 10, comprenant une structure de fixation pour un couvercle (11, 12, 13) qui peut s'ouvrir et se fermer pour couvrir un chemin de transport (3) dans un dispositif de traitement d'image (1) qui réalise un traitement d'image sur des supports de traitement transportés sur le chemin de transport (3), dans lequel :
le couvercle (11, 12, 13) comprend un couvercle de côté amont (11) qui couvre le côté amont du chemin de transport (3), et un couvercle de côté aval (12) qui couvre le côté aval du chemin de transport (3) ;
le couvercle de côté amont (11) et le couvercle de côté aval (12) sont supportés à pivotement par et attachés pour s'ouvrir et se fermer sur un pivot de côté amont (14 ; 14a) et un pivot de côté aval (15 ; 15a), respectivement ; et
le pivot de côté amont (14 ; 14a) et le pivot de côté aval (15 ; 15a) sont disposés opposés à une partie protégée (13) du chemin de transport (3) où un traitement d'image est réalisé avec le chemin de transport (3) entre ceux-ci ;
les premier et second couvercles correspondant aux couvercles de côté amont et de côté aval et les premier et second pivots correspondant aux pivots de côté amont et de côté aval.

12. Dispositif de traitement d'image selon la revendication 11, dans lequel :
une tête d'impression (40) qui imprime sur les supports de traitement est disposée dans la partie protégée (13).

13. Dispositif de traitement d'image selon la revendication 12, dans lequel :
la tête d'impression (40) est une tête à jet d'encre ; et
un espace de recouvrement dans lequel un capuchon (42) pour la tête à jet d'encre est disposé est formé entre le pivot de côté amont (14 ; 14a) et le pivot de côté aval (15 ; 15a).
